# EUROPÄISCHE PATENTSCHRIFT

(11) **EP 3 064 467 B1**
(45) Veröffentlichungstag und Bekanntmachung des Hinweises auf die Patenterteilung: **15.08.2018**
(21) Anmeldenummer: 16158220.0
(22) Anmeldetag: 02.03.2016
(51) Int. Cl.: B66F 9/08, F16F 3/087

(54) **HUBANORDNUNG EINES HUBWAGENS MIT MASTDÄMPFUNGSEINRICHTUNGEN UND HUBWAGEN**
HUB ASSEMBLY OF A LIFT TRUCK WITH MAST DAMPING DEVICES AND LIFT TRUCK
SYSTEME DE LEVAGE DE CHARIOT ELEVATEUR AVEC DISPOSITIFS D'AMORTISSEMENT DU MÂT ET CHARIOT ELEVATEUR

(30) Priorität: 03.03.2015 US 201514636692
(43) Veröffentlichungstag der Anmeldung: 07.09.2016
(73) Patentinhaber: Jungheinrich Aktiengesellschaft, 22047 Hamburg (DE)
(72) Erfinder: Chan, Kelvin, Jersey Village, TX Texas 77065 (US); Recchia, John, Detroit, MI Michigan 48228 (US)
(74) Vertreter: Hauck Patentanwaltspartnerschaft mbB

(56) Entgegenhaltungen:
- EP-B1- 1 512 662
- JP-A- S5 447 268
- JP-A- 2010 052 867

## Beschreibung

Die vorliegende Erfindung betrifft eine Hubanordnung eines Hubwagens, insbesondere Gabelstaplers, mit einem Hubmast mit einer Achse, einem ersten Mastabschnitt und einem zweiten Mastabschnitt, der in oder am ersten Mastabschnitt axial geführt und relativ zu diesem in Axialrichtung bewegbar ist, wobei Dämpfungseinrichtungen aus elastischem Material am ersten Mastabschnitt oder am zweiten Mastabschnitt vorgesehen sind, die ein Aufprallen des zweiten Mastabschnittes auf den ersten Mastabschnitt in der eingefahrenen Endposition des zweiten Mastabschnittes verhindern.

Eine derartige Hubanordnung mit entsprechenden Dämpfungseinrichtungen ist bekannt. So ist beispielsweise in der EP 1 512 662 B1 eine Dämpfungsanordnung für das Hubgerüst eines Flurförderzeuges beschrieben, bei der ein Dämpfungselement aus einem steifen Elastomer auf einem Querverbindungselement eines Mastabschnittes angeordnet ist. Das Dämpfungselement ist hierbei länglich und flach geformt. Ein Querverbindungselement eines anderen Mastabschnittes trifft in seiner eingefahrenen Endposition auf das Dämpfungselement, das den entsprechenden Aufprall abfedert. Es handelt sich hierbei um einen horizontalen Dämpfer, der entsprechenden Vertikalkräften entgegenwirkt.

Ein solcher Horizontaldämpfer dämpft Vertikalkräfte (in z-Richtung), die auf den entsprechenden Mastabschnitt einwirken, hat jedoch keine Wirkung in Bezug auf Horizontalkräfte. Solche Horizontalkräfte entstehen dadurch, dass sich ein Mastabschnitt relativ zu einem anderen Mastabschnitt im Bereich seiner Toleranzen in Horizontalrichtung bewegt und dabei entsprechende Klappergeräusche erzeugt. Um diese Klappergeräusche zu verringern, hat man sogenannte Vertikaldämpfer verwendet, die in Horizontalrichtung zwischen den Mastabschnitten auftretende Kräfte (durch Bewegungen im Toleranzbereich) dämpfen, wenn der eine Mastabschnitt relativ zum anderen Mastabschnitt vollständig eingezogen ist. Durch solche Vertikaldämpfer, die beispielsweise an benachbarten Vertikalflächen der sich relativ zueinander bewegenden Mastabschnitte angeordnet sind, werden daher in Horizontalrichtung (y-Richtung) auftretende Kräfte gedämpft.

Mit diesen bekannten Vertikaldämpfern können jedoch keine Kräfte gedämpft werden, die in Horizontalrichtung senkrecht zu der vorstehend angegebenen Richtung, d.h. in x-Richtung, auftreten.

Im Stand der Technik sind daher einerseits Horizontaldämpfer bekannt, die vertikal auftretende Kräfte dämpfen, wie beispielsweise in der vorstehend genannten EP 1 512 662 B1 beschrieben. Andererseits sind Vertikaldämpfer bekannt, die in einer Richtung in Horizontalrichtung auftretende Kräfte dämpfen. Dämpfungseinrichtungen, die eine Dämpfung in allen drei Richtungen (in z-, y- und x-Richtung) bewirken, sind jedoch nicht bekannt.

Aus JPS 54-47268 (A) ist ein Hubgerüst für ein Flurförderzeug bekannt, bei dem ein flexibles Gummielement zur Verhinderung von Vibration und Geräusch mit einer Führungsrolle zusammenwirkt. Die Führungsrolle wird in einer Endlage in Kontakt mit dem elastischen Material gebracht, wobei dieses zwei einander zugewandte, gekrümmte Kontaktflächen besitzt.

Der vorliegenden Erfindung liegt die Aufgabe zugrunde, eine Hubanordnung der eingangs beschriebenen Art zur Verfügung zu stellen, bei der die Dämpfungseinrichtungen besonders gute Dämpfungseigenschaften besitzen.

Diese Aufgabe wird erfindungsgemäß bei einer Hubanordnung der angegebenen Art dadurch gelöst, dass die Dämpfungseinrichtungen so ausgebildet und angeordnet sind, dass sie zusätzlich zur Dämpfung der Bewegung des zweiten Mastabschnittes in Axialrichtung (entlang der z-Achse) Bewegungen desselben in beiden senkrecht dazu verlaufenden Richtungen (entlang der x-Achse und der y-Achse) dämpfen.

Erfindungsgemäß werden somit Dämpfungseinrichtungen zur Verfügung gestellt, die einen Dämpfungseffekt in allen drei Richtungen des Raumes bewirken. Hiermit werden nicht nur Vertikalkräfte gedämpft, die vom zweiten Mastabschnitt auf den ersten Mastabschnitt ausgeübt werden, sondern auch vom zweiten Mastabschnitt auf den ersten Mastabschnitt ausgeübte Horizontalkräfte, die beispielsweise entstehen, wenn sich der zweite Mastabschnitt in oder an der Führung des ersten Mastabschnittes innerhalb seines Toleranzbereiches bewegt. Hierbei werden sowohl in x-Richtung als auch in y-Richtung auftretende Kräfte wirksam gedämpft.

Erfindungsgemäß werden die Dämpfungseinrichtungen von zwei beidseitig den zweiten Mastabschnitt kontaktierenden Dämpfungselementen am ersten Mastabschnitt gebildet. Bei dieser Ausgestaltung ist daher der zweite Mastabschnitt innerhalb des ersten Mastabschnittes geführt und kontaktiert in seiner Endstellung die zu beiden Seiten des zweiten Mastabschnittes am ersten Mastabschnitt vorgesehenen Dämpfungselemente. Beide Dämpfungselemente nehmen somit den unteren Endabschnitt des zweiten Mastabschnittes zwischen sich auf. Die Dämpfungselemente sind hierbei keilförmig ausgebildet, so dass ein Keileffekt entsteht, der eine wirksame Dämpfung der Bewegung des zweiten Mastabschnittes in Axialrichtung (z-Richtung) verursacht. Gleichzeitig damit werden Bewegungen in beiden Horizontalrichtungen (x-Richtung und y-Richtung) gedämpft. Erfindungsgemäß besitzen der zweite Mastabschnitt und die Dämpfungselemente parallel zueinander verlaufende, ebene Kontaktflächen. Hierbei handelt es sich vorzugsweise um Schrägflächen, die den vorstehend beschriebenen Keileffekt bewirken.

Dies hat den Vorteil, dass mit einer Dämpfungseinrichtung verschiedenartige Dämpfungseffekte erreicht werden können. Es müssen daher keine voneinander getrennten Horizontaldämpfer und Vertikaldämpfer mehr vorgesehen werden.

Die Dämpfungselemente sind hierbei vorzugsweise auf einer stufenförmigen Erweiterung des ersten Mastabschnittes angeordnet.

Die vorstehend beschriebene Ausführungsform schließt nicht aus, dass die Dämpfungselemente auch am zweiten Mastabschnitt, d.h. an den unteren Endbereichen desselben, fixiert sein können, wobei auch hier ein entsprechender Dämpfungseffekt auftritt, wenn der zweite Mastabschnitt auf den ersten Mastabschnitt trifft und seine Endstellung einnimmt.

Vorzugsweise sind auch die beiden unteren Ecken des zweiten Mastabschnitte mit derartigen Schrägflächen versehen, so dass in der Endstellung des zweiten Mastabschnittes die am zweiten Mastabschnitt vorgesehenen Schrägflächen und die an den Dämpfungselementen vorgesehenen Schrägflächen aneinanderliegen.

Damit auch in beiden Horizontalrichtungen eine Dämpfung möglich ist, ist die eben ausgebildete Kontaktfläche des jeweiligen Dämpfungselementes vorzugsweise schräg im Raum angeordnet und bildet sowohl mit der x-Achse als auch mit der y-Achse einen von 90° abweichenden Winkel. Insbesondere weist dabei jedes Dämpfungselement eine Grundfläche, eine senkrecht hierzu verlaufende Rückfläche und eine Kontaktfläche für den zweiten Mastabschnitt auf, die sowohl in x-Richtung als auch in y-Richtung einen von 90° verschiedenen Winkel mit der Grundfläche (xy-Ebene) bildet.

Speziell sind dabei die Dämpfungselemente mit ihrer Grundfläche und Rückfläche am ersten Mastabschnitt fixiert. Die Grundfläche ist auf einer horizontal verlaufenden Fläche des ersten Mastabschnittes befestigt, während die Rückfläche auf einer vertikal verlaufenden Fläche des ersten Mastabschnittes fixiert ist. Geht man hierbei davon aus, dass die x-Achse senkrecht zur Achse (z-Achse) des Hubmastes verläuft, dann bildet hierbei die Kontaktfläche sowohl mit der xz-Ebene als auch mit der yz-Ebene einen von 90° abweichenden Winkel, so dass Bewegungen in beiden Horizontal-richtungen (x-Richtung, y-Richtung) durch Kontakt mit den Dämpfungselementen gedämpft werden.

Für die Dämpfungseinrichtungen können übliche elastische Materialien zur Anwendung kommen, die einerseits für einen guten Dämpfungseffekt sorgen, andererseits jedoch ausreichend stabil und robust (schlagfest) sind, um durch den aufprallenden Mastabschnitt nicht zerstört zu werden. Geeignete Materialien sind hierfür beispielsweise relativ steife Elastomere, die dem Fachmann bekannt sind.

Die vorliegende Erfindung betrifft ferner einen Hubwagen, insbesondere einen Gabelstapler, der mit einer Hubanordnung versehen ist, die in der vorstehend beschriebenen Weise ausgebildet ist.

Die Erfindung wird nachfolgend anhand von Ausführungsbeispielen in Verbindung mit der Zeichnung im Einzelnen erläutert. Es zeigen:
- Fig. 1: einen schematischen Vertikalschnitt durch einen Teil einer Hubanordnung mit einem ersten Mastabschnitt und einem zweiten Mastabschnitt;
- Fig. 2: eine erste Ausführungsform eines Dämpfungselementes in räumlicher Ansicht und in zwei Seitenansichten sowie in einer Draufsicht; und
- Fig. 3: eine weitere Ausführungsform, nicht gemäß dem beanspruchten Gegenstand, eines Dämpfungselementes in räumlicher Ansicht und in zwei Seitenansichten sowie in einer Draufsicht.

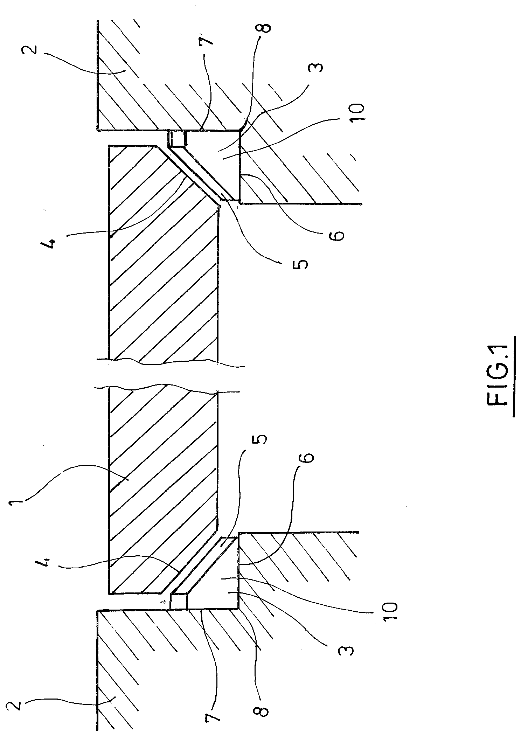

In Figur 1 ist schematisch ein Teil einer Hubanordnung eines Gabelstaplers angedeutet, bei der ein zweiter Mastabschnitt 1 beweglich in einem ersten Mastabschnitt 2 angeordnet und in diesem geführt ist. Der zweite Mastabschnitt 1 ist in einer Stellung kurz vor seiner eingefahrenen unteren Endposition dargestellt. In seiner unteren Endposition stößt der zweite Mastabschnitt 1 gegen Dämpfungseinrichtungen, die von zwei keilförmigen Dämpfungselementen 3 gebildet sind, welche spiegelbildlich zueinander ausgebildet und angeordnet sind. Diese beiden Dämpfungselemente 3 sind auf einem stufenförmigen Abschnitt 8 des ersten Mastabschnittes angeordnet und auf diesem über Bolzen (nicht gezeigt) fixiert, wobei eine Grundfläche 6 des Dämpfungselementes 3 auf einem horizontal verlaufenden Abschnitt und eine Rückfläche 7 des Dämpfungselementes 3 auf einem vertikal verlaufenden Abschnitt der stufenförmigen Erweiterung des ersten stationären Mastabschnittes 2 angeordnet sind.

Jedes Dämpfungselement 3 ist etwa keilförmig ausgebildet und weist neben seiner Grundfläche 6 und der senkrecht hierzu verlaufenden Rückfläche 7 eine schräg verlaufende Kontaktfläche 5 auf. Diese ist sowohl schräg zur Grundfläche 6 als auch schräg zur Rückfläche 7 angeordnet und bildet daher mit der Vorderseite 10 des Dämpfungselementes keinen rechten Winkel.

Wie man ferner Figur 1 entnehmen kann, sind die beiden unteren Ecken des zweiten beweglichen Mastabschnittes 1 abgeschrägt und besitzen schräg verlaufende Kontaktflächen 4, die parallel zur Kontaktfläche 5 der jeweiligen Dämpfungselemente verlaufen. In der unteren Endstellung des zweiten Mastabschnittes 1 liegen daher die Flächen 4 an den Kontaktflächen 5 der Dämpfungselemente 3 an.

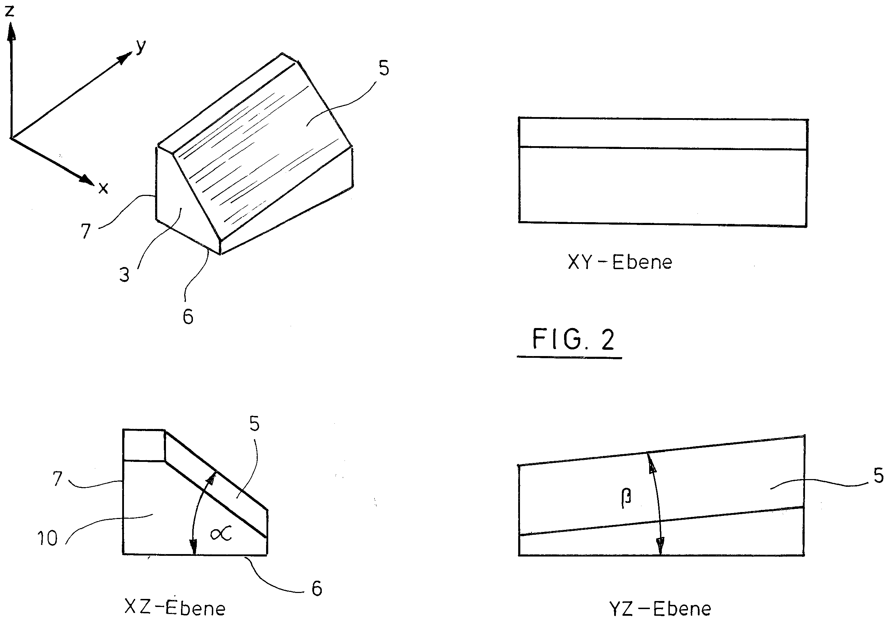

Figur 2 zeigt das Dämpfungselement 3 der Figur 1 in räumlicher Darstellung sowie in zwei Seitenansichten und einer Draufsicht. Wenn man hierbei ein Koordinatensystem zugrunde legt, das in Figur 2 angedeutet ist, so ergeben sich in den jeweiligen Ebenen die entsprechenden Ansichten. Es ist hierbei deutlich zu erkennen, dass die Kontaktfläche 5 sowohl mit der xz-Ebene als auch mit der yz-Ebene einen von 90° abweichenden Winkel bildet. Die entsprechenden Winkel sind mit α und β gekennzeichnet. Hierbei entspricht die Grundfläche 6 der xy-Ebene, während die Rückfläche 7 der yz-Ebene entspricht. Die xz-Ebene bildet die Vorderseite 10.

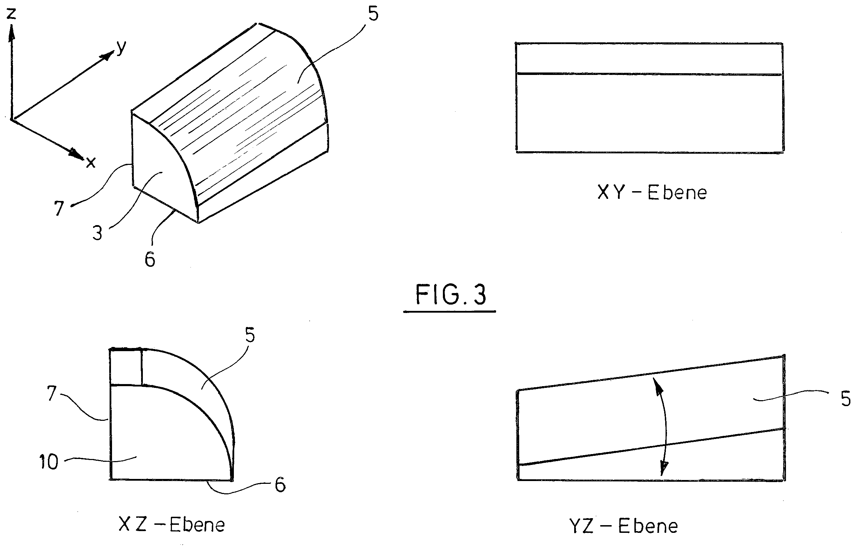

Figur 3 zeigt eine weitere Ausführungsform, nicht gemäß dem beanspruchten Gegenstand, eines Dämpfungselementes 3. Diese Ausführungsform unterscheidet sich von der der Figur 2 nur dadurch, dass hierbei die Kontaktfläche 5 nicht eben, sondern gekrümmt ausgebildet ist. Es ergibt sich daher ein domförmiges Gebilde.

Wenn im Betrieb der Hubanordnung sich der zweite Mastabschnitt 1 in seine untere Endposition absenkt, treten die beiden Kontaktflächen 4 des zweiten Mastabschnittes mit den entsprechenden Kontaktflächen 5 der beiden Dämpfungselemente 3 in Eingriff. Hierdurch wird der Aufprall des zweiten Mastabschnittes auf den ersten Mastabschnitt gedämpft. Die miteinander in Eingriff tretenden Kontaktflächen 4, 5 stoppen dabei die Bewegung des zweiten Mastabschnittes in Axialrichtung der Hubanordnung (z-Richtung) und verhindern gleichzeitig eine Bewegung in beiden Horizontalrichtungen (in x-Richtung und y-Richtung), da die sowohl den Winkel α als auch den Winkel β bildenden Kontaktflächen eine Horizontalbewegung parallel zur Bildebene der Figur 1 und senkrecht dazu verhindern.

## Patentansprüche

1. Hubanordnung eines Hubwagens, insbesondere Gabelstaplers, mit einem Hubmast mit einer Achse und mit einem ersten Mastabschnitt und einem zweiten Mastabschnitt, wobei Dämpfungseinrichtungen aus elastischem Material am ersten Mastabschnitt oder zweiten Mastabschnitt vorgesehen sind, die ein Aufprallen des zweiten Mastabschnittes auf den ersten Mastabschnitt in der eingefahrenen Endposition des zweiten Mastabschnittes verhindern, wobei
die Dämpfungseinrichtungen so ausgebildet und angeordnet sind, dass sie zusätzlich zur Dämpfung der Bewegung des zweiten Mastabschnittes (1) in Axialrichtung (entlang der z-Achse) Bewegungen desselben in beiden senkrecht dazu verlaufenden Richtungen (entlang der x-Achse und der y-Achse) dämpfen, und die Dämpfungseinrichtungen von zwei beidseitig den zweiten Mastabschnitt (1) kontaktierenden Dämpfungselementen (3) gebildet sind,
**dadurch gekennzeichnet, dass**
die Dämpfungselemente (3) keilförmig ausgebildet sind und der zweite Mastabschnitt (1) und die Dämpfungselemente (3) parallel zueinander verlaufende, ebene Kontaktflächen (4, 5) aufweisen, die Bewegungen des zweiten Mastabschnittes (1) in z-, x- und y-Richtung dämpfen.

2. Hubanordnung nach Anspruch 1, **dadurch gekennzeichnet, dass** die Dämpfungselemente (3) auf einer stufenförmigen Erweiterung (8) des ersten Mastabschnittes (2) angeordnet sind.

3. Hubanordnung nach Anspruch 1 oder 2, **dadurch gekennzeichnet, dass** jedes Dämpfungselement (3) eine Grundfläche (6), eine senkrecht hierzu verlaufende Rückfläche (7) und eine Kontaktfläche (5) für den zweiten Mastabschnitt (1) besitzt, die sowohl in x-Richtung als auch in y-Richtung einen von 90° verschiedenen Winkel mit der Grundfläche (xy-Ebene) bildet.

4. Hubanordnung nach Anspruch 3, **dadurch gekennzeichnet, dass** die Dämpfungselemente (3) mit ihrer Grundfläche (6) und Rückfläche (7) am ersten Mastabschnitt (2) fixiert sind.

5. Hubwagen, insbesondere Gabelstapler, **dadurch gekennzeichnet, dass** er mit einer Hubanordnung nach einem der vorangehenden Ansprüche versehen ist.

## Claims

1. A lifting assembly of a lift truck, a forklift truck in particular, with a lift mast with an axis and with a first mast section and a second mast section, wherein damping devices of elastic material are provided on the first mast section or the second mast section which prevent bouncing of the second mast section onto the first mast section in the retracted end position of the second mast section, wherein
the damping devices are designed and arranged such that in addition to damping the movement of the second mast section (1) in the axial direction (i.e. along the z-axis) they damp also movements of it in both the directions running vertical thereto (i.e. along the x-axis and the y-axis), and the damping devices are formed by two damping elements (3) which contact the second mast section (1) on both sides,
**characterised in that**
the damping elements (3) are made in the shape of wedges and the second mast section (1) and the damping elements (3) comprise flat contact surfaces (4, 5), running parallel to each other, which damp movements of the second mast section (1) in the z-, x- and y-direction.

2. The lifting assembly according to claim 1, **characterised in that** the damping elements (3) are arranged on a stepped extension (8) of the first mast section (2).

3. A lifting assembly according to claim 1 or 2, **characterised in that** each damping element (3) has a base surface (6), a rear surface (7) running vertically to this and a contact surface (5) for the second mast section (1), which forms an angle different from 90° with the base surface (i.e. the xy-surface) in the x-direction as well as in the y-direction.

4. The lifting assembly according to claim 3, **characterised in that** the damping elements (3) are fixed on the first mast section (2) with their base surface (6) and their rear surface (7).

5. A lift truck, a forklift truck in particular, **characterised in that** it is provided with a lifting assembly according to one of the preceding claims.

## Revendications

1. Système de levage d'un chariot de levage, notamment un chariot élévateur, avec un mât élévateur avec un axe et avec une première section de mât et une deuxième section de mât, dans lequel des dispositif amortisseurs d'un matériau élastique sont prévus dans la première section de mât ou la deuxième section de mât qui empêchent des chocs de la deuxième section de mât sur la première section de mât dans la position d'extrémité rétractée de la deuxième section de mât,
les dispositifs amortisseurs étant arrangés et conçus tellement qu'en outre à l'amortissement du mouvement de la deuxième section de mât (1) dans la direction axiale (id est le long de l'axe z), ils amortissent aussi des mouvements de celle-la dans les deux directions qui s'étendent perpendiculairement à cela, (id est le long de l'axe x et de l'axe z), et les dispositifs amortisseurs sont formés par deux éléments amortisseurs (3) qui touchent la deuxième section de mât (1) sur les deux cotés,
**caractérisé en ce que**
les éléments amortisseurs (3) sont faites en forme de coins et la deuxième section de mât (1) et les éléments amortisseurs (3) comportent des surfaces de contact (4, 5) plates, s'étendant parallèle l'une à l'autre, qui amortissent des mouvements de la deuxième section de mât (1) dans les directions z, x et y.

2. Système de levage selon la revendication 1, **caractérisé en ce que** les éléments amortisseurs (3) sont arrangés dans un élargissement étagé (8) de la première section de mât (2).

3. Système de levage selon la revendication 1 ou 2, **caractérisé en ce que** chaque élément amortisseur (3) a une surface de base (6), une surface arrière (7) s'étendant perpendiculairement à celle-ci et une surface de contact (5) pour la deuxième section de mât (1), qui forme un angle différent de 90° avec la surface de base (i.e. la surface xy) dans la direction x aussi bien que dans la direction y.

4. Système de levage selon la revendication 3, **caractérisé en ce que** les éléments amortisseurs (3) sont fixés sur la première section de mât (2) avec leurs surfaces de base (6) et leurs surfaces arrière (7).

5. Chariot de levage, notamment chariot élévateur, **caractérisé en ce que** il est prévu d'un système de levage selon une des revendications précédentes.
